# EUROPÄISCHE PATENTSCHRIFT

(11) **EP 0 441 209 B1**
(45) Veröffentlichungstag und Bekanntmachung des Hinweises auf die Patenterteilung: **15.09.1993**
(21) Anmeldenummer: 91101023.9
(22) Anmeldetag: 26.01.1991
(51) Int. Cl.: C02F 9/00, C02F 1/54, C02F 11/14, C02F 11/10, B01D 37/03

(54) **Verfahren zur Verwertung von Russ aus der Synthesegas-Erzeugung**
Method for the utilization of carbon black coming from synthesis gas production
Procédé pour l'utilisation de suie provenant de la production de gaz de synthèse

(30) Priorität: 03.02.1990 DE 4003242
(43) Veröffentlichungstag der Anmeldung: 14.08.1991
(73) Patentinhaber: BASF Aktiengesellschaft, 67063 Ludwigshafen (DE)
(72) Erfinder: Sander, Bruno, Dr., W-6700 Ludwigshafen (DE); Marquardt, Siegfried, W-6712 Bobenheim-Roxheim (DE); Kempe, Uwe, Dr., W-6701 Dannstadt-Schauernheim (DE); Vodrazka, Wolfgang, Dr., W-5300 Bonn 1 (DE); Lueth, Gero, Dr., W-6800 Mannheim 1 (DE)

(56) Entgegenhaltungen:
- EP-A- 53 250
- EP-A- 53 251
- EP-A- 213 402
- EP-A- 286 872
- DD-A- 234 851
- DE-A- 3 733 532
- DE-A- 3 826 520

## Beschreibung

Die vorliegende Erfindung betrifft ein Verfahren zur Verwertung von Ruß, der bei der Synthesegas-Erzeugung in Form von rußhaltigen Abwässern anfällt. Der Ruß liegt in den Abwässern in feinstdispersem Zustand vor.

Bei der Erzeugung von Synthesegas durch partielle Oxidation von schwerem Heizöl oder Ölrückständen fällt feinteiliger Ruß an, der durch Waschen des rußhaltigen Gases mit Wasser laufend aus dem Prozeß ausgeschleust werden muß.

Die rußhaltigen Abwässer haben je nach Verfahrensführung einen Rußgehalt von 0,5 - 5,0 Gew.-%. Der Aschegehalt des Rußes beträgt je nach Einsatzstoff und Verfahrensweise 1 - 15 Gew.-%. In den Aschen sind Schwermetalle, hauptsächlich Nickel und Vanadium, enthalten. Der Gehalt an Schwermetallen ist bei Verwendung von ölrückständen als Einsatzstoffe besonders hoch.

Eine Entsorgung der rußhaltigen Abwässer durch Einleiten in biologische Kläranlagen ist prinzipiell möglich. Hierbei muß aber damit gerechnet werden, daß der feinstdisperse Ruß weder an die Belebtschlammflocken gebunden, noch im Nachklärbecken abgeschieden wird und somit in den Vorfluter gelangt. Des weiteren besteht grundsätzlich die Gefahr, daß toxische Schwermetalle aus der Asche des Rußes eluiert werden und so in den Auslauf der Kläranlage gelangen.

Aus der europäischen Patentanmeldung 286 872 ist bekannt, daß man den schwermetallhaltigen Ruß aus den Abwässern abtrennen und in eine deponiefähige Form überführen kann. Dabei werden die rußhaltigen Abwässer mit Calciumhydroxid und organischen Flockungsmitteln behandelt, durch Schwerkraftfiltration vorentwässert und durch Druckfiltration im Bereich von 0,5 - 15 bar nachentwässert. Eine Fixierung der Schwermetalle wird erreicht, indem man soviel Calciumhydroxid den rußhaltigen Abwässern zusetzt, daß der pH-Wert eines wäßrigen Auszuges des erhaltenen Filterkuchens mehr als 11,8, vorzugsweise mehr als 12,0 beträgt.

Das vorgenannte Entsorgungsverfahren, Abtrennung des Rußes aus den Abwässern und Deponierung der Rußfilterkuchen, ist jedoch aufwendig. Da die Restfeuchten der Rußfilterkuchen im Bereich von 75 bis 80 % liegen, ist die zu deponierende Restmenge mit 4 - 5 t Filterkuchen je t Rußtrockenmasse sehr hoch. Nachteilig ist ferner, daß bei der Deponierung der Rußfilterkuchen der Heizwert des Rußes verloren geht.

Aufgabe der Erfindung war es demnach, ein Verfahren zu entwickeln, bei dem die zu deponierende Restmenge stark reduziert, der Heizwert des Rußes genutzt, und die gesamten Entsorgungskosten drastisch gesenkt werden.

Diese Aufgaben werden erfindungsgemäß dadurch gelöst, daß man die rußhaltigen Abwässer in einer Klärschlammbehandlungsanlage
- mit einem Klärschlamm vermischt, dem organische Flockungsmittel als Entwässerungshilfsmittel zugegeben werden und dem gegebenenfalls noch weitere Mengen feinteiliger Kohlen und/oder Aschen zugegeben werden,
- dieses vorbehandelte Schlammgemisch der Filtration unterwirft,
- die erhaltenen Filterkuchen verbrennt und
- die Asche auf einer geordneten Deponie ablagert.

Völlig überraschend war, daß die Schwermetalle des Rußwassers infolge der erfindungsgemäßen Behandlung nicht in Lösung gehen. Die bei der Filtration erhaltenen Schlammfiltrate zeigen daher keine Erhöhung der Nickel- und Vanadiumgehalte.

Eine Fixierung (Unlöslichmachen) der in den rußhaltigen Abwässern enthaltenen Schwermetalle war bisher nur durch eine Behandlung mit Kalkmilch (Europäische Patentanmeldung 286 872) oder durch eine Behandlung mit Calciumcarbonat oder Kalkmilch und mit Eisensalz-Lösung (Europäische Patentschrift 213 402) möglich.

Es war ferner überraschend und nicht zu erwarten, daß die Schwermetalle bei der naghfolgenden Verbrennung der Klärschlamm-Filterkuchen vollständig in die Asche bzw. den Elektrofilter-Staub eingebunden werden.

Die Verfahrensschritte (1) und (2) können prinzipiell nach den in den europäischen Patentschriften 53250 und 53251 beschriebenen Verfahren zum Entwässern von Klärschlämmen auf Filterpressen ausgeführt werden. Bei diesen Verfahren werden Klärschlämme mit Zuschlagstoffen, wie feinteilige Kohlen oder Aschen oder deren Gemische, in einer Menge von 0,5 - 1,5 Gew.-Teilen je Gewichtsteil Schlammfeststoff vermischt, mit organischen Flockungsmitteln in einer Menge von 1 - 7 bzw. 2 - 8 kg je t Schlammfeststoff behandelt und schließlich durch Druckfiltration auf Filterpressen weitergehend entwässert.

Durch die Zugabe von feinteiligen Kohlen, aber auch durch die besondere Art der Schlammkonditionierung (Verfahrensschritt 1) und der Schlammentwässerung (Verfahrensschritt 2) werden Filterkuchen erhalten, die selbstgängig in Wirbelschichtöfen oder Etagenöfen verbrannt werden können. Eine energiezehrende Trocknung der Klärschlamm-Filterkuchen oder eine Zugabe weiterer Mengen feinteiliger Kohlen und/oder Heizöl, um die Filterkuchen verbrennen zu können, ist nicht erforderlich. Die Verfahren arbeiten demnach mit der Mindestmenge an Kohle, die zur Erlangung einer selbstgängigen Verbrennung der Klärschlamm-Filterkuchen erforderlich ist.

Eine Aufgabe der vorliegenden Erfindung ist es, den Heizwert des Rußes aus der Synthesegas-Erzeugung zu nutzen. Dies gelingt, indem man die rußhaltigen Abwässer Klärschlämmen zugibt, die nach den Verfahren der europäischen Patentschriften 53250 oder 53251 entwässert und dann verbrannt werden sollen.

Hierdurch ist es möglich, die zur selbstgängigen Verbrennung der Klärschlamm-Filterkuchen erforderlichen Mengen an feinteiligen Kohlen durch Ruß aus der Synthesegas-Erzeugung ganz oder zumindest teilweise zu ersetzen. Auf diese Weise kann der Heizwert des Rußes genutzt und der Einsatz von Primärenergieträgern reduziert werden.

Unter Klärschlämmen sollen verstanden werden, Primärschlämme, die in der Vorklärstufe einer Kläranlage durch Sedimentation der Schlammfeststoffe erhalten werden, Belebtschlämme, die als überschußschlämme laufend aus biologischen Kläranlagen ausgeschleust werden, Mischschlämme, die durch Vermischen von Belebtschlamm und Primärschlamm entstehen und Faulschlämme. Diese Schlämme können kommunaler, industrieller oder gemischter Herkunft sein.

Der Feststoffgehalt solcher Schlämme beträgt im allgemeinen 0,5 - 5,0 Gew.-%. Bei Anwendung organischer Flockungsmittel bereits bei der Schlammeindickung liegen die Schlammfeststoffgehalte höher.

Zur Verbesserung der Entwässerbarkeit des Klärschlamms, dem rußhaltige Abwässer zugegeben worden sind, werden organische Flockungsmittel eingesetzt. Es können handelsübliche Flockungsmittel-Marken verwendet werden. Hierbei handelt es sich um wasserlösliche, makromolekulare Verbindungen, die durch Polymerisation oder durch Copolymerisation von Acrylamid, von Acrylsäure und/oder ihren Salzen oder von Estern der Acrylsäure bzw. Methacrylsäure, die über ihre Alkoholkomponente speziell modifiziert worden sind. Diese Flockungsmittel unterscheiden sich außerdem noch durch ihre unterschiedliche elektrische Ladung (kationisch, anionisch oder elektroneutral) und durch ihren Polymerisationsgrad.

Die Flockungsmittel werden in Form ihrer 0,05 - 0,2 %igen wäßrigen Lösungen eingesetzt. Die Herstellung solcher verdünnter Flockungsmittellösungen aus den festen und flüssigen Handelsprodukten erfolgt nach bekannten Methoden in handelsüblichen Vorrichtungen.

Die erforderlichen Flockungsmittelmengen liegen im Bereich von 1 bis 8 kg Flockungsmittel/t Schlammfeststoff. Die Dosiermenge ist abhängig von der Art des jeweiligen Schlamms und von der Feststoffkonzentration.

Die Vorauswahl der organischen Flockungsmittel, die für die Verbesserung des Entwässerungsverhaltens der erfindungsgemäßen Schlammgemische eingesetzt werden sollen, kann bereits im Labormaßstab erfolgen, z.B. nach den Methoden, die in der europäischen Patentschrift 8425 beschrieben worden sind.

Die für eine selbstgängige Verbrennung von Klärschlamm-Filterkuchen erforderliche Kohlen-Zuschlagmenge kann ebenso bereits im Labormaßstab nach den Bestimmungsmethoden der europäischen Patentschrift 8425 ermittelt werden.

Bei der alleinigen Verwendung von feinteiligen Kohlen liegen die Mengenverhältnisse von Kohlentrockenstoff (KTS): Schlammtrockenstoff (STS) im Bereich von 0,1 : 1 bis 2,0 : 1. Die erforderliche Kohlenmenge ist stark abhängig von dem Entwässerungsverhalten der jeweiligen Klärschlämme.

Bisher wird eine Klärschlammverbrennung vorwiegend in Großkläranlagen, in denen größere Schlammengen anfallen, ausgeübt. Die aus Synthesegasanlagen anfallenden Rußmengen sind aber in der Regel nicht ausreichend, um den für eine selbstgängige Verbrennung von Klärschlamm-Filterkuchen erforderlichen Kohlebedarf zu decken. In diesen Fällen werden entweder zusätzlich feinteilige Kohlen oder feinteilige Kohlen und Asche zugeschlagen.

Als feinteilige Kohlen kommen in Betracht: Feinkohlen, die bei der Trennung von Feinkohle und Gangart (Berge) durch Flotation und nachfolgende Entwässerung gewonnen werden. Auch Kohleschlämme, die bei Naßaufbereitungsverfahren entstehen, sind geeignet. Ferner können Siebfraktionen von Kraftwerkskohlen oder von Grünkoks aus Raffinerien bis zu einer Korngröße von 1 mm verwendet werden.

Ist die Verwendung von Aschen als weiterer Zuschlagstoff sinnvoll, dann kommen Aschen, die bei der Verbrennung der Klärschlämme an demselben Ort anfallen, in Betracht. Ferner können Aschen, die bei der Verbrennung von Steinkohle in Kraftwerken anfallen, verwendet werden.

Bei Verwendung von Asche als zusätzliche Zuschlagstoffe liegen die Mengenverhältnisse im Bereich von KTS : ATS (Aschetrockenstoff) : STS = 0,2 : 0,3 : 1 bis 0,6 : 1 : 1. Der Bedarf an Kohletrockenstoff kann in diesen Fällen vollständig oder teilweise durch Rußtrockenstoff ersetzt werden.

Das Rußwasser und die gegebenenfalls erforderlichen Zuschlagstoffe werden in den Klärschlämmen mit Hilfe von Mischwerken homogen verteilt. Diese können absatzweise oder kontinuierlich betrieben werden. Besonders geeignet haben sich Doppelwellenmischer.

Die Zugabe der Flockungsmittellösungen erfolgt entweder in diesen Mischwerken oder aber vor oder nach der Beschickungspumpe für die nachgeschalteten Filterpressen.

Als Filterpressen kommen Kammerfilterpressen, Rahmenfilterpressen oder Membranfilterpressen in Betracht. Auf diesen Filterpressen wird diskontinuierlich in größeren Schichtdicken im Bereich von 20 bis 40 mm gearbeitet. Beim Entwässern auf diesen Filterpressen wird die Kohle-Asche-Konditionierung bevorzugt, da hier der Aufbau eines Drainagesystems zur Erzielung hoher Entwässerungsgrade erforderlich ist.

Die Filtrierzeiten liegen im Bereich von 90 bis 180 Minuten. Es werden Preßdrücke bis 15 bar angewandt. Bei Einhaltung der erfindungsgemäßen Maßnahmen lösen sich die Filterkuchen einwandfrei von den Filtertüchern ab, so daß ein selbsttätiger Abwurf erfolgen kann.

Die erzielten Feststoffgehalte in den Filterkuchen liegen je nach Entwässerbarkeit der Klärschlämme und der Höhe des Rußanteils im Bereich von 35 bis 55 %. Die Heizwerte der Filterkuchen betragen 4600 - 6300 kJ/kg (1100 - 1500 kcal/kg). Die Filterkuchen können selbstgängig verbrannt werden.

Das erfindungsgemäße Verfahren kann auch auf kontinuierlich arbeitenden Entwässerungsmaschinen, wie z.B. Bandfilterpressen oder Vakuumbandfiltern ausgeübt werden. In diesen Fällen bringt die reine Kohlekonditionierung gute Ergebnisse. Die Schichtdicken der Filterkuchen betragen im allgemeinen 3 - 15 mm. Auf eine zusätzliche Verwendung von Aschen kann daher verzichtet werden. Die Feststoffgehalte und die Heizwerte der Filterkuchen liegen insbesondere bei Entwässerung auf Bandfilterpressen auf demselben Niveau wie bei den oben erwähnten Filterpressen.

Bei Verwendung des Rußes aus der Synthesegas-Erzeugung anstelle von handelsüblichen feinteiligen Kohlen zur Konditionierung und Entwässerung von Klärschlämmen werden keine Nachteile bei den Filtrierzeiten und dem Ablöseverhalten der Filterkuchen von den Filtertüchern festgestellt.

Ein wirtschaftlicher Vorteil des erfindungsgemäßen Verfahrens besteht darin, daß in der Produktionsanlage keine zusätzliche Abwasserbehandlungsanlage erforderlich ist, in welcher Ruß abgetrennt und durch Chemikalienzugabe in eine deponiefähige Form gebracht werden muß. Das Rußwasser kann als solches in bestehenden Entwässerungs- und Verbrennungseinrichtungen mitentsorgt werden.

Als besondere Vorteile des erfindungsgemäßen Verfahrens sind zu werten, daß der Heizwert des Rußes genutzt wird und daß die zu deponierende Restmenge drastisch gesenkt wird. Während bei den Verfahren gemäß der europäischen Patentschrift 213 402 und der europäischen Patentanmeldung 286 872 4 - 5 t Filterkuchen je t Rußtrockenmasse deponiert werden müssen, beträgt diese Menge jetzt nur noch 0,04 bis 0,06 t Asche je t Rußtrockenmasse. Dies führt zu einer erheblichen Schonung des Deponieraums.

Die Erfindung wird nachfolgend anhand von Beispielen näher erläutert. Die dort angegebenen Prozentzahlen sind immer Gewichtsprozente.

Bei den Beispielen wurde ein Mischschlamm aus einer mechanisch-biologischen Kläranlage verwendet, der zu ca. 90 % aus Belebtschlamm und zu ca. 10 % aus Primärschlamm besteht und dessen organischer Anteil am Schlammtrockenstoff (STS) zwischen 55 und 65 % beträgt. Der untere Heizwert des Schlammtrockenstoffs liegt im Mittel bei 14 600 kJ/kg (3 500 kcal/kg).

Bei dem eingesetzten rußhaltigen Abwasser (Rußwasser) handelte es sich um eine wäßrige Rußsuspension, die bei der Wäsche rußhaltiger Synthesegase, die aus ölrückständen gewonnen wurden, entsteht. Der untere Heizwert dieses Rußes liegt zwischen 27 000 und 31 000 kJ/kg (6 450 bis 7 400 kcal/kg), im Mittel bei 29 000 kJ/kg (6 900 kcal/kg).

Als feinteilige Kohle wurden Flotationskohlekonzentrate mit einem unteren Heizwert von 29 300 kJ/kg (7 000 kcal/kg) angewandt.

Bei der verwendeten Asche handelte es sich um die Flugasche aus der Verbrennung des mit Flotationskohle konditionierten und entwässerten Mischschlamms.

### Beispiel 1

1 000 g Mischschlamm mit einem STS-Gehalt von 3,8 % wurden zunächst mit 115 g Rußwasser vermischt. Das Rußwasser hatte einen Rußgehalt von 2,0 % und der Ruß enthielt 0,17 % Nickel und 0,26 % Vanadium.

Anschließend wurden noch 26,6 g wasserfeuchte Flotationskohle mit einem Kohlegehalt von 77 % sowie 26,6 g trockene Asche zugesetzt und vermischt.

Asl Rührorgan wurde ein Blattrührer, Kantenlänge 70 x 70 mm, mit 4 quadratischen Aussparungen von je 1 cm² verwendet. Die Rührerdrehzahl betrug 300 min⁻¹, die Gesamtrührzeit 30 min.

Das Mischungsverhältnis der Komponenten RTS (Rußtrockenstoff) : KTS ATS : STS betrug 0,06 : 0,54 : 0,7 : 1. Die Gesamtkohlemenge bestand zu 10 % aus Ruß.

Das Gemisch wurde mit 133 ml einer 0,2 %igen wäßrigen Lösung eines organischen Flockungsmittels mit 60 % kationischer Modifizierung versetzt und 30 Sekunden lang bei 200 min⁻¹ gerührt.

Daraufhin wurden 1 000 g des geflockten Gemischs auf eine Büchnernutsche von 120 mm Durchmesser mit eingelegtem Polypropylen-Leinen gegeben und einer Schwerkraftfiltration unterworfen.

Das Filtrat war praktisch feststofffrei und enthielt 1 mg Nickel/l und weniger als 0,5 mg Vanadium/l.

Nach 30 Minuten Schwerkraftfiltration wurde der Filterrückstand in einer Laborstempelpresse, Filterfläche 145 x 145 mm, zwischen zwei Polypropylen-Filtertüchern 2 Minuten lang bei 10 bar ausgepreßt. Es entstand ein fester formstabiler Filterkuchen mit folgenden Daten:
- Gesamt-Feststoffgehalt:: 48,3%
- STS-Gehalt:: 21,0%
- Heizwert H_{U}:: 5497 kJ/kg (1314 kcal/kg)

Der Filterkuchen war selbstgängig verbrennbar.

### Vergleichsbeispiel

Es wurde ein Gemisch hergestellt wie in Beispiel 1 beschrieben, jedoch ohne Zusatz von Rußwasser. Der Zusatz an wasserfeuchter Kohle wurde auf 29,6 g erhöht. Das Mischungsverhältnis der Trockenstoffe KTS : ATS : STS betrug 0,6 : 0,7 : 1.

Das Gemisch wurde weiterbehandelt wie in Beispiel 1 beschrieben.

Das Filtrat dieses Gemischs enthielt 1 mg Nickel/l und weniger als 0,5 mg Vanadium/l.

Für den in der Laborstempelpresse hergestellten Filterkuchen wurden folgende Daten ermittelt:
- Gesamt-Feststoffgehalt:: 48,3%
- STS-Gehalt:: 21,0%
- Heizwert H_{U}:: 5501 kJ/kg (1315 kcal/kg)

### Beispiel 2

Es wurde ein Gemisch aus Mischschlamm, Rußwasser, Kohle und Asche hergestellt und weiterverarbeitet wie in Beispiel 1 beschrieben. Das Mischungsverhältnis RTS : KTS : ATS : STS betrug jedoch 0,3 : 0,3 : 0,7 : 1. Die Hälfte des Kohleanteils bestand aus Ruß.

Das Filtrat dieses Gemischs enthielt, wie beim Vergleichsbeispiel ohne Rußzusatz, 1 mg Nickel/l und weniger als 0,5 mg Vanadium/l.

Der Filterkuchen aus der Stempelpresse hatte folgende Daten:
- Gesamt-Feststoffgehalt:: 46,0%
- STS-Gehalt:: 20,0%
- Heizwert H_{U}:: 5095 kJ/kg (1218 kcal/kg)

Der Filterkuchen konnte selbstgängig verbrannt werden.

### Beispiel 3

Es wurde ein Gemisch aus Mischschlamm, Rußwasser und Asche (ohne Kohlezusatz) hergestellt und verarbeitet wie in Beispiel 1 beschrieben. Das Mischungsverhältnis RTS : ATS : STS betrug 0,6 : 0,7 : 1. Der Kohleanteil bestand zu 100 % aus Ruß.

Im Filtrat dieses Gemischs wurden, wie beim Vergleichsbeispiel ohne Rußzusatz, 1 mg Nickel/l und weniger als 0,5 mg Vanadium/l gefunden.

Der Filterkuchen aus der Stempelpresse wies folgende Daten auf:
- Gesamt-Feststoffgehalt:: 43,5%
- STS-Gehalt:: 18,9%
- Heizwert H_{U}:: 4643 kJ/kg (1110 kcal/kg)

Der Filterkuchen war selbstgängig verbrennbar.

### Beispiel 4

Es wurde eine Mischung aus Mischschlamm, Rußwasser und Kohle (ohne Aschezusatz) hergestellt und behandelt wie in Beispiel 1 beschrieben. Das Mischungsverhältnis RTS : KTS : STS wurde auf 0,65 : 0,65 : 1 eingestellt. 50 Gew.-% der Gesamtkohle bestand aus Ruß.

Das Filtrat dieses Gemischs enthielt 1 mg Nickel/l und weniger als 0,5 mg Vanadium/l.

Bei der Pressung des Filterrückstandes in der Stempelpresse entstand ein Filterkuchen mit folgenden Daten:
- Gesamt-Feststoffgehalt:: 37,7%
- STS-Gehalt:: 16,4%
- Heizwert H_{U}:: 6927 kJ/kg (1656 kcal/kg)

Der Filterkuchen verbrannte selbstgängig.

### Beispiel 5

154 kg Mischschlamm mit einem STS-Gehalt von 5,1 % wurden zunächst mit 13,8 kg Rußwasser mit einem Rußgehalt von 4,3 % vermischt. Der Ruß im Rußwasser enthielt 0,36 % Nickel und 1,5 % Vanadium.

Außerdem wurden noch 8,3 kg wäßrige Flotationskohlesuspension mit 40 % Kohle und 6,3 kg trockene Asche zugesetzt und homogen eingemischt.

Das Mischungsverhältnis RTS : KTS : ATS : STS betrug 0,075 : 0,425 : 0,8 : 1. Der Rußanteil an der Gesamtkohlenmenge betrug 15 %.

Das Gemisch wurde zur Entwässerung in eine Pilot-Kammerfilterpresse, 450 x 450 mm, mit 4 Kammern, Plattenabstand 30 mm, gepumpt. Auf der Saugseite der Pumpe wurden je 1 kg Gemisch 0,17 l einer 0,2 %igen Lösung eines organischen Flockungsmittels mit 60 % kationischer Modifizierung kontinuierlich zudosiert.

Nach 140 min war die Filtration bei einem Enddruck von 15 bar beendet.

Das Filtrat enthielt weniger als 0,5 mg Nickel/l und weniger als 0,5 mg Vanadium/l. Die gleichen Werte wurden im Filtrat eines Vergleichsversuchs ohne Rußzusatz gefunden.

Nach Öffnung der Filterpresse lösten sich die Filterkuchen selbsttätig vom Filtertuch ab.

Daten des Filterkuchens (Mittelwerte):
- Gesamt-Feststoffgehalt:: 52,0%
- STS-Gehalt:: 22,6%
- Heizwert H_{U}:: 5433 kJ/kg (1299 kcal/kg)

Der Filterkuchen konnte ohne Zusatzbrennstoff in einem Wirbelschichtofen verbrannt werden.

### Beispiel 6

In der Schlammbehandlungsanlage einer mechanisch-biologischen Kläranlage wurden einem kontinuierlichen Massenstrom von 80 t Mischschlamm/h mit 5 % STS in einem Doppelwellenmischer folgende Stoffe zugemischt:
- 8: t Rußwasser/h mit 2,5 % Ruß
- 5,2: t Kohlesuspension/h mit 50 % Kohle
- 2,6: t Asche/h

Der Ruß im Rußwasser enthielt 1,0 % Nickel und 2,5 % Vanadium.

Das Mischungsverhältnis RTS : KTS : ATS : STS betrug 0,05 : 0,65 : 0,65 : 1. Der Rußanteil an der Gesamtkohle betrug 7 %.

Das Gemisch wurde zur Entwässerung in eine Kammerfilterpresse (Rahmenabmessungen 2 x 2 m, Rahmenabstand 30 mm) gepumpt. Zuvor wurden noch 16 t/h einer 0,2 %igen Lösung eines organischen Flockungsmittels mit 60 % kationischer Modifizierung kontinuierlich in die Rohrleitung (Saugseite) dosiert.

Das Filtrat lief in die Belebungsbecken der Kläranlage zurück. Es enthielt weniger als 0,5 mg Nickel/l und weniger als 0,5 mg Vanadium/l.

Bei 15 bar Preßdruck wurde der Filtrationsvorgang beendet und die Kammern geöffnet. Die Filterkuchen fielen selbsttätig in den Sammelschacht.

### Daten der Filterkuchen

- Gesamt-Feststoffgehalt:: 48 - 50 %
- STS-Gehalt:: 20 - 21 %
- Nickelgehalt:: 0,02 %
- Vanadiumgehalt:: 0,045 %
- Heizwert H_{U}:: 5900 - 6250 kJ/kg (1400 - 1500 kcal/kg)

Die Filterkuchen wurden anschließend in einem Wirbelschichtofen verbrannt.

Verbrennungstemperaturen und Abgaszusammensetzung blieben gegenüber der Verbrennung von rußfreien Filterkuchen konstant.

Die im Ruß enthaltenen Schwermetalle Nickel und Vanadium wurden vollständig mit der Flugasche im Elektrofilter abgeschieden. Der Nickelgehalt im Elektrofilterstaub erhöhte sich um den Faktor 2 und der Vanadiumgehalt um den Faktor 4.

Die Flugasche wurde auf einer geordneten Sondermülldeponie abgelagert.

## Patentansprüche

1. Verfahren zur Verwertung von Ruß, der bei der Synthesegas-Erzeugung in Form von rußhaltigen Abwässern anfällt, dadurch gekennzeichnet, daß man die rußhaltigen Abwässer in einer Klärschlammbehandlungsanlage
a) mit einem Klärschlamm vermischt, dem organische Flockungsmittel als Entwässerungshilfsmittel zugegeben werden und dem gegebenenfalls noch weitere Mengen feinteiliger Kohlen und/oder Aschen zugegeben werden,
b) dieses vorbehandelte Schlammgemisch der Filtration unterwirft
c) die erhaltenen Filterkuchen verbrennt und
d) die Asche auf einer geordneten Deponie ablagert.

## Claims

1. A process for utilizing the soot obtained in the production of synthesis gas in the form of an aqueous soot-containing waste liquor, which comprises
a) mixing said liquor in a sewage sludge treatment plant with a sewage sludge to which organic flocculants are added as drainage aids with or without a further quantity of finely divided coal or ash,
b) filtering this pretreated sludge mixture,
c) incinerating the resulting filter cake and
d) burying the ash in a sanitary landfill.

## Revendications

1. Procédé pour valoriser le noir de fumée contenu dans des eaux résiduaires de la production du gaz de synthèse, caractérisé en ce que, dans une installation de traitement par des boues de clarification,
a) on mélange les eaux résiduaires contenant le noir de fumée avec une boue de clarification à laquelle on a ajouté des agents floculants organiques en tant que produits auxiliaires de déshydratation et le cas échéant également des compléments de charbon et/ou de cendres en fines particules,
b) on filtre les boues mélangées qui ont subi ce traitement préalable,
c) on brûle les gâteaux de filtration, et
d) on rejette les cendres sur un dépôt conforme aux prescriptions administratives.
